# EUROPÄISCHE PATENTSCHRIFT

(11) **EP 1 274 931 B1**
(45) Veröffentlichungstag und Bekanntmachung des Hinweises auf die Patenterteilung: **22.03.2006**
(21) Anmeldenummer: 01940126.4
(22) Anmeldetag: 05.04.2001
(51) Int. Cl.: F02D 41/22

(54) **VERFAHREN ZUR FEHLERERKENNUNG UND FEHLERHEILUNG**
METHOD FOR RECOGNIZING AND CORRECTING ERRORS
PROCEDE DE DETECTION ET DE CORRECTION D'ERREURS

(30) Priorität: 08.04.2000 DE 10017543
(43) Veröffentlichungstag der Anmeldung: 15.01.2003
(73) Patentinhaber: ROBERT BOSCH GMBH, 70442 Stuttgart (DE)
(72) Erfinder: Franke, Steffen, Essex (GB); Eberle, Kristina, 71706 Hardthof (DE); Kluth, Carsten, 70469 Stuttgart (DE); Heinrich, Detlef, 71638 Ludwigsburg (DE); Edelmann, Thomas, 74379 Ingersheim (DE)
(86) Internationale Anmeldenummer: PCT/DE2001/001314
(87) Internationale Veröffentlichungsnummer: WO 2001/077511

(56) Entgegenhaltungen:
- DE-A- 4 326 498
- DE-A- 19 545 649
- DE-A- 19 829 621

## Beschreibung

Die Erfindung betrifft ein Verfahren zur Fehlererkennung und Fehlerheilung, insbesonders in einer Diagnoseeinrichtung in Verbindung mit einer Klopfregelung bei einer Brennkraftmaschine, nach der Gattung des Hauptanspruchs.

### Stand der Technik

Es ist bekannt, dass bei verschiedenen Einrichtungen eine Diagnose durchgeführt wird, bei der Bauteile oder von Bauteilen bzw. Sensoren gelieferte Signale auf Plausibilität geprüft werden und anhand einer solchen Plausibilitätsprüfung entschieden wird, ob ein Fehler vorliegt oder nicht. Bei einem erkannten Fehler wird eine Ersatzmaßnahme aktiviert oder eine Ersatzgröße anstelle der gemessenen Größe verwendet. Ein einmal erkannter Fehler kann auch als geheilt beurteilt werden, d. h. der Fehler wurde zu einem früheren Zeitpunkt erkannt, liegt aber jetzt nicht mehr vor. In diesem Fall wird üblicherweise auch die Ersatzmaßnahme deaktiviert.

Bei bekannten Diagnosefunktionen, die beispielsweise im Steuergerät einer Brennkraftmaschine ablaufen, werden Größen, die für die Regelung der Brennkraftmaschine wesentlich sind, auf Plausibilität überwacht. Solche Größen sind beispielsweise von Sensoren gelieferte Signale. Ein Fehler wird erkannt, wenn das zu prüfende Signal oder ein daraus gebildetes Signal eine Schwelle entweder über- oder unterschreitet. Es liegt dabei kein Fehler vor, wenn das Signal im erlaubten Bereich ist. Die Schwelle muß dabei nicht fest sein, sondern kann in einem Speicher des Steuergerätes als Kennfeld oder Kennlinie in Abhängigkeit von verschiedenen Betriebspunkten der Brennkraftmaschine abgelegt werden. Bei solchen Plausibilitätsuntersuchungen kann es vorkommen, dass ein vorliegender Fehler in einem Betriebspunkt erkannt wird und in einem anderen nicht. Dies hat zur Folge, dass ein erkannter vorhandener Fehler in dem zweiten Betriebspunkt als geheilt erkannt wird, da er in diesem Betriebspunkt nicht vorliegt. Es wird dann die Ersatzmaßnahme wieder deaktiviert, obwohl der Fehler beim ersten Betriebspunkt noch vorliegt. Auch werden bei einer solchen Plausibilitätsuntersuchung keine Fehlerarten unterschieden.

Ein Verfahren zur Fehlererkennung und Fehlerheilung, das eine noch weitergehende Analyse durchführt, ist aus der DE-P 1.97 560 81.4 bekannt. Bei diesem bekannten Verfahren zur Fehlererkennung und Fehlerheilung, das sich auf die überwachung der Funktionsfähigkeit einer Klopferkennungseinrichtung bei einer Brennkraftmaschine bezieht, wird die Klopferkennung und die Fehlerheilung ausgehend von zwei verschiedenen Prüfverfahren durchgeführt. Bei einem ersten Prüfverfahren wird ein sogenannter 0-Test durchgeführt, bei dem kein Signal auf die Auswerteschaltung gegeben wird und bei einem zweiten Test wird ein Testimpuls eingespeist. Bei beiden Tests wird die Reaktion des Systems ausgewertet. Wenn eine der beiden Diagnosefunktion einen Fehlerverdacht erzeugt, wird von der üblichen alternierenden Diagnose abgewichen und die den Fehler anzeigende Diagnose wird wiederholt. Bei der Fehlerheilung wird eine ähnliche Vorgehensweise durchgeführt und das Verfahren, das zur Fehlerheilung geführt hat, zunächst wiederholt, bevor auf endgültige Fehlerheilung erkannt wird.

### Vorteile der Erfindung

Das erfindungsgemäße Verfahren zur Fehlererkennung und Fehlerheilung hat den Vorteil, dass eine besonders sichere und zuverlässige Fehlererkennung und insbesonders auch eine zuverlässige Fehlerheilung möglich ist, bei der irrtümliche Fehlerheilungen ausgeschlossen sind. Erzielt werden diese Vorteile durch das erfindungsgemäße Verfahren zur Fehlererkennung und Fehlerheilung mit den Merkmalen des Anspruchs 1. Dazu wird die Fehlererkennung und die Fehlerheilung selbst in verschiedene Bereiche einer Kennlinie oder des Kennfelds unterteilt und die Fehlererkennung selbst wird in jedem Bereich zugelassen, die Fehlerheilung wird jedoch nur zugelassen, wenn der Fehler und der nicht mehr vorhandene Fehler, also die Fehlerheilung im selben Bereich der Kennlinie oder des Kennfelds aufgetreten sind. Vorteilhafterweise werden den Bereichen verschiedene Betriebspunkte zugeordnet. Eine Fehlererkennung ist dann in jedem Betriebspunkt möglich. Die Fehlerheilung ist jedoch nur dann zulässig, wenn der zweite Betriebspunkt im selben Betriebsbereich liegt wie der erste Betriebspunkt.

Dabei ist es besonderes vorteilhaft, die Betriebsbereiche ausgehend von Kennlinien und/oder Kennfeldern aufzustellen. Solche Kennlinien oder Kennfelder sind beispielsweise eine Fehlererkennungsschwelle, die in Abhängigkeit vom Betriebspunkt angegeben wird, wobei der Betriebspunkt wiederum von Größen der Brennkraftmaschine, beispielsweise der Drehzahl, der Last, der Temperatur usw. abhängig ist.

überschreitet das Sensorsignal oder ein daraus abgeleitetes Signal beispielsweise die Fehlererkennungsschwelle, wird ein Fehler erkannt

Die Möglichkeit, die Fehlerart zu unterscheiden, stellt einen weiteren besonderen Vorteil der Erfindung dar. Da eine Fehlerheilung nur dann zugelassen wird, wenn die Fehlerart und der Betriebspunkt des Nichtmehrauftretens des Fehlers übereinstimmen, wird eine besonders zuverlässige Fehlerheilung erhalten, bei der irrtümliche Fehlererkennungen und Fehlerheilungen weitestgehend ausgeschlossen sind.

### Zeichnung

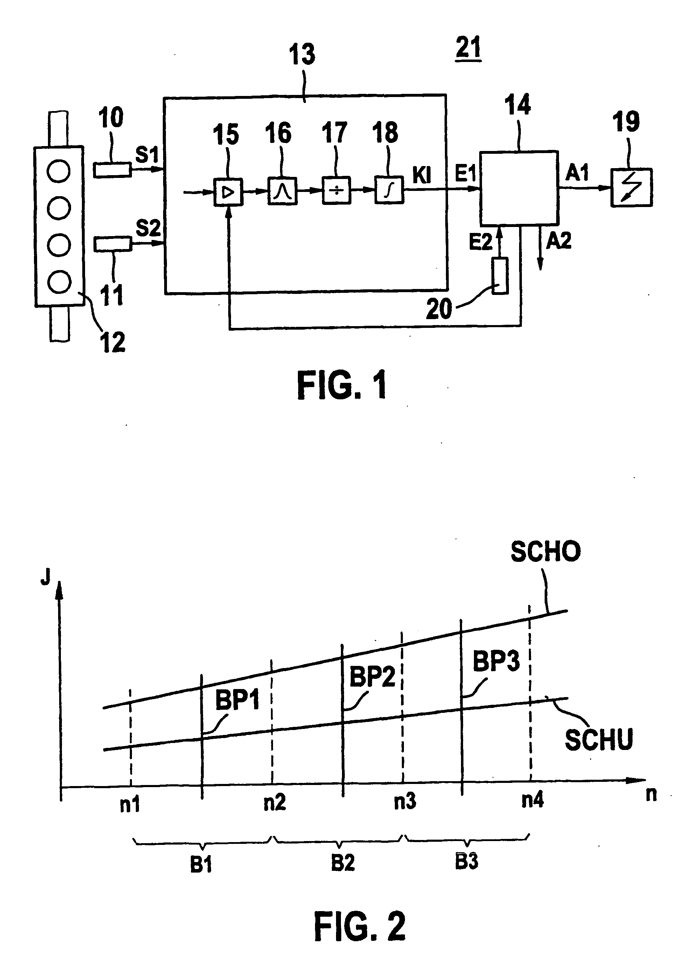

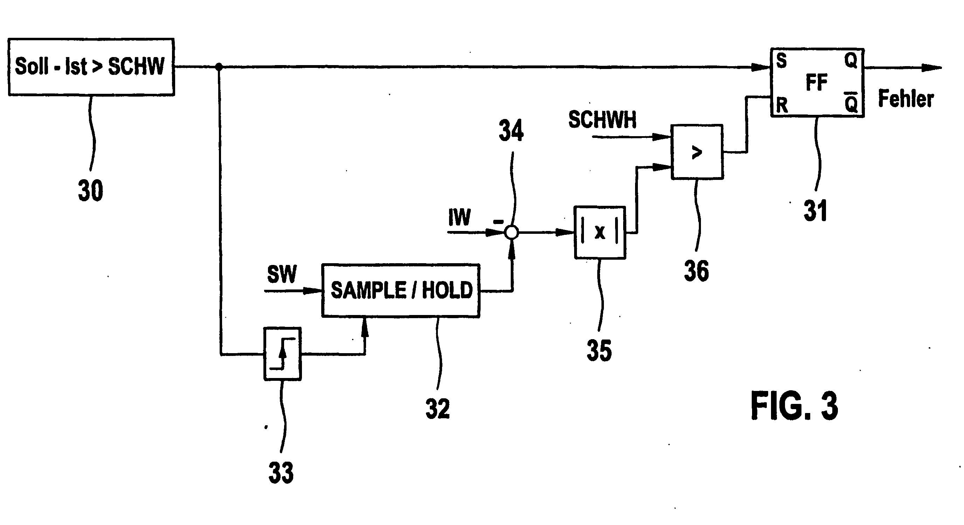

In den beiden Figuren der Zeichnung sind zwei Ausführungsbeispiele der Erfindung dargestellt. Ein erstes Ausführungsbeispiel betrifft eine Fehlererkennung und Fehlerheilung bei einer Einrichtung zur Klopferkennung bei einer Brennkraftmaschine, die in Figur 1 schematisch dargestellt ist. In Figur 2 ist der Verlauf des zulässigen Bereiches für das Ausgangssignal des Klopfsensors bzw. für eine daraus gebildete Grösse (z.B. den Referenzpegel) (J) über der Drehzahl (n) für das Ausführungsbeispiel nach Figur 1 dargestellt Dieser Signalverlauf kann zur erfindungsgemässen Fehlererkennung und Fehlerheilung ausgewertet werden. Das andere Ausführungsbeispiel nach Figur 3 betrifft die Auswertung der Lage der Nockenwelle bei einer Brennkraftmaschine, bei der letztendlich die Abweichung des Soll- vom Istwinkel überprüft wird, zur Fehlererkennung und Fehlerheilung. Die genauen Vorgehensweisen werden in der nachfolgenden Beschreibung näher erläutert.

### Beschreibung

In der Figur 1 ist eine Vorrichtung zur Klopferkennung bei einer Brennkraftmaschine dargestellt, bei der ein erfindungsgemäßes Verfahren zur Fehlererkennung und Fehlerheilung ablaufen kann. Die Diagnosefunktionen laufen dabei im Steuergerät 15 der Brennkraftmaschine ab.

Bei dem in Figur 1 angegebenen Ausführungsbeispiel für eine Vorrichtung zur Klopferkennung bei einer Brennkraftmaschine sind zwei Klopfsensoren 10, 11 vorhanden, die vorgebbaren Zylindern einer Brennkraftmaschine 12 zugeordnet sind und die Signale S1 und S2 abgeben. Diese Klopfsensoren 10, 11 sind über eine Auswerteschaltung 13 mit dem Eingang E1 eines Rechners 14 verbunden, der Bestandteil eines nicht näher dargestellten Steuergerätes 15 der Brennkraftmaschine ist. Die Auswerteschaltung 13 kann auch selbst Bestandteil des Steuergerätes sein. Das erfindungsgemässe Verfahren läuft dabei im Steuergerät ab.

Die eigentliche Klopferkennung erfolgt im Ausführungsbeispiel nach Figur 1 im Rechner 14. Die Auswerteschaltung 13 umfasst einen Verstärker 15 mit einstellbarem Verstärkungsfaktor, dem abwechslungsweise die Ausgangssignale S1 und S2 zugeführt werden. In einem sich anschliessenden Bandpass 16 werden die verstärkten Signale so gefiltert, daß bevorzugt die klopftypischen Signale weitergeleitet werden. An den Bandpass schliesst sich ein Gleichrichter 17 an, dessen Ausgangssignale z.B. im Integrator 18 aufintegriert werden. Die integrierten Signale KI werden dem Rechner zugeführt, in dem ein Referenzsignal gebildet wird. Die Bildung des Referenzsignals wird hier nicht explizit beschrieben. Überschreitet das Integral KI das Referenzsignal in vorgebbarer Weise, wird auf Klopfen erkannt. Bei der Bildung des Referenzsignales können weitere, vom Betriebszustand der Brennkraftmaschine abhängige Signale berücksichtigt werden.

Dem Rechner 14 können über einen Eingang E2 weitere Signale zugeführt werden, die beispielsweise den Betriebszustand der Brennkraftmaschine charakterisieren. Ein solches Signal ist beispielsweise die Drehzahl n der Brennkraftmaschine oder die Fahrpedalstellung oder die angesaugte Luftmasse usw. Diese Signale werden mit Hilfe geeigneter Sensoren (20) gemessen und nach einer geeigneten Aufbereitung vom Rechner 14 zur Klopferkennung und zur Fehlererkennung sowie zur Fehlerheilung ausgewertet. Der Rechner 14 regelt in Abhängigkeit der Ausgangssignale der Auswerteschaltung 13 sowie der weiteren Signale die am Eingang E2 zugeführt werden, die Zündungsendstufe 19 der Brennkraftmaschine 12 und/oder gegebenenfalls weitere Einrichtungen der Brennkraftmaschine, beispielsweise durch Abgabe entsprechender Signale am Ausgang A1 oder A2. Dem Rechner 14 sind die erforderlichen Speichermittel, die in der Zeichnung nicht explizit angegeben sind, zugeordnet, in denen Kennfelder oder Kennlinien, die für die Klopferkennung benötigt werden, abgelegt sind. Die Klopferkennung läuft üblicherweise so ab, dass Klopfen erkannt wird, wenn das aufbereitete Sensorsignal einen vorgebbaren, insbesonders variablen Schwellwert bzw. Referenzwert überschreitet.

Die zusätzlich durchgeführte Fehlererkennung erfolgt beispielsweise so, dass ein Fehler erkannt wird, wenn das zu prüfende Signal bzw. die Messgrösse oder eine davon abgeleitete Grösse, beispielsweise ein Referenzwert eine weitere Schwelle, z. B. eine obere Schwelle über- oder eine untere Schwelle unterschreitet. Es liegt dagegen kein Fehler vor wenn das Signal im erlaubten Bereich liegt. Die Schwelle wird in einem Kennfeld oder als Kennlinie in Abhängigkeit vom Betriebspunkt, beispielsweise abhängig von der Drehzahl, der Last oder der Temperatur usw. entnommen. Ein Beispiel für einen drehzahlabhängig veränderbaren erlaubten Bereich für das Klopfsensorsignal ist in Figur 2 dargestellt. Der erlaubte Bereich wird dabei von einer oberen Schwelle SCHO und einer unteren Schwelle SCHU begrenzt.

Ergänzt wird die Fehlererkennung bzw. die sich anschließende Fehlerheilung durch die im folgenden beschriebenen Maßnahmen. Die Fehlerheilung wird dabei eingeschränkt und nur noch unter bestimmten Randbedingungen zugelassen. Dazu werden die Kennfelder und Kennlinien in Bereiche B1, B2, B3,...unterteilt und die Fehlerheilung nur noch für den Bereich zugelassen, in dem auch der Fehler erkannt wurde. Dabei kann zusätzlich auch die Fehlerart berücksichtigt werden. Ein Fehler wird also nur dann geheilt, wenn auch die Fehlerart gleich ist. Durch dieses Vorgehen wird verhindert, dass eine im Betriebspunkt vertikale Linie BP1 richtig erkannter Fehler in einem Betriebspunkt BP2 fälschlich wieder als geheilt betrachtet wird und gegebenenfalls die Ersatzmaßnahmen wieder aufgegeben werden. Mit dem vorliegenden erfindungsgemässen Verfahren kann damit verhindert werden, dass ein in einem Betriebspunkt richtig erkannter Fehler in einem anderen Betriebspunkt fälschlicherweise als geheilt erkannt wird, da er in diesem Betriebspunkt nicht aufgetreten ist. Die erfindungsgemässe Fehlererkennung bzw. Fehlerheilung kann nicht nur für das Sensorausgangssignal selbst, sondern auch für daraus abgeleitet Grössen, beispielsweise den Referenzwert erfolgen.

Die konkrete Vorgehensweise bei der Fehlererkennung und Fehlerheilung wird anhand der im folgenden näher beschriebenen Beispiele erläutert.

### Ausführungsbeispiel 1:

Im Betriebspunkt 1 und dem Bereich 1 des Diagnosekennfeldes kann ein vorhandener Fehler richtig erkannt werden. Im Betriebspunkt 2 und dem Bereich 2 des Diagnosekennfeldes kann der vorhandene Fehler nicht erkannt werden.

Unter diesen Bedingungen wird im Betriebspunkt BP1 der Fehler erkannt und es wird eine Ersatzmaßnahme aktiviert. Bezogen auf das Ausführungsbeispiel Klopferkennung wird beispielsweise ein Fehler des Klopfsensors erkannt und der Zündwinkel wird nicht abhängig vom Ausgangssignal des Sensors eingestellt, sondern abhängig von einem vorgebbaren Ersatzwert. Nach der Fehlererkennung wird der Betriebspunkt gewechselt. Im Betriebspunkt BP2 kann der Fehler nicht erkannt werden. Die Fehlerheilung ist jedoch gesperrt, weil die Fehlererkennung im Bereich B1 erfolgt ist. Der Fehler bleibt somit erkannt und die Ersatzmaßnahme aktiv. Sollte im Laufe des weiteren Betriebes der Fehler wieder verschwinden, kann eine Fehlerheilung im aktuellen Betriebspunkt BP2 nicht erfolgen, da die Fehlererkennung im Bereich 1 erfolgte. Erst nach einem Wechsel in den Betriebspunkt BP1 erfolgt bei nicht mehr vorhandenem Fehler eine Fehlerheilung und die Ersatzmaßnahme wird aufgehoben. Dieses Vorgehen kann auch auf weitere Bereiche ausgedehnt werden. Es kann dann in jedem Bereich entschieden werden, ob der Fehler dort erkannt wurde. Ist dies der Fall, kann die Fehlerheilung auch nur dort erfolgen. Die Fehlerheilung kann jedoch in jedem Bereich erfolgen, in dem ein Fehler erkannt wurde und nicht nur in dem Bereich, in dem der Fehler zum ersten mal aufgetreten ist und entdeckt wurde.

### Ausführungsbeispiel 2:

Im Betriebspunkt BP1 und im Betriebspunkt BP3, also in den Bereichen B1 und B3 des Diagnosekennfeldes kann ein vorhandener Fehler richtig erkannt werden. Im Betriebspunkt BP2 und dem Bereich B2 des Diagnosekennfeldes kann der vorhandene Fehler jedoch nicht erkannt werden.

In diesem Fall werden im Betriebspunkt BP1 der Fehler erkannt und eine Ersatzmaßnahme aktiviert. Anschließend wird in den Betriebspunkt BP2 gewechselt. Dort kann der Fehler gemäß dem angegebenen Beispiel nicht erkannt werden. Die Fehlerheilung ist also gesperrt, weil die Fehlererkennung im Bereich B1 erfolgt ist. Der Fehler bleibt somit solange man sich im Betriebspunkt BP2 befindet, erkannt und die Ersatzmaßnahme aktiv. Bei einem anschließenden Wechsel in den Betriebspunkt BP3 kann der Fehler erkannt werden. Da der Fehler schon im Bereich B1 erkannt wurde und die Ersatzmaßnahme bereits aktiv ist, muß jetzt nur noch vermerkt werden, dass der Fehler auch im Bereich B3 erkannt wurde und in diesem Bereich die Fehlerheilung erlaubt ist. Darauf wird wieder in den Betriebspunkt BP2 gewechselt. Verschwindet im Laufe des weiteren Betriebs der Fehler wieder kann in dem aktuellen Betriebspunkt BP2 die Fehlerheilung nicht erfolgen, da die Fehlererkennung im Bereich B1 erfolgte. Da jedoch auch im Bereich B3 eine Fehlererkennung erfolgte, kann erst nach einem Wechsel in den Betriebspunkt BP1 oder den Betriebspunkt BP3 eine Fehlerheilung erfolgen und die Ersatzmaßnahme aufgehoben werden. Die Fehlerheilung im Betriebspunkt BP3 ist in diesem Beispiel möglich, weil der Fehler auch dort, also im Betriebsbereich B3 erkannt wurde wenn der Betriebspunkt BP3 bei vorhandenem Fehler nicht angefahren worden wäre, dürfte in diesem Bereich die Fehlerheilung nicht erfolgen.

Zusätzlich zu den Bereichen kann auch die Fehlerart bei der Fehlerheilung berücksichtigt werden. Eine Fehlerheilung darf in einem Bereich nur erfolgen, wenn in dem Bereich der Fehler mit der gleichen Fehlerart erkannt wurde. In diesem Fall reicht die Fehlererkennung in dem Bereich allein nicht aus. Nur wenn Fehlerbereich und Fehlerart übereinstimmen, ist eine Fehlerheilung möglich, ansonsten wird die Fehlerheilung gesperrt und die Ersatzmaßnahme bleibt aktiv.

### Ausführungsbeispiel 3

Die Berücksichtigung der Fehlerart bei der Fehlerheilung wird im Beispiel 3 näher erläutert. Voraussetzung im Beispiel 3 ist, dass das zu überwachende Signal zwischen 2 Schwellen SCHO und SCHU liegt. Überschreitet das Signal die obere Schwelle wird auf Fehler mit der Fehlerart MAX-Fehler erkannt. Wird die untere Schwelle unterschritten, wird ein Fehler mit der Fehlerart MIN-Fehler erkannt. Im Betriebspunkt BP1, das heißt im Bereich B1 können sowohl der MIN-Fehler als auch der MAX-Fehler erkannt werden. Im Betriebspunkt BP2 kann dagegen nur der MIN-Fehler erkannt werden.

Im Betriebspunkt BP1 unterschreitet das Signal die untere Schwelle und es wird der Fehler der Fehlerart MIN-Fehler erkannt und eine Ersatzmaßnahme aktiviert. Anschließend wird in den Betriebspunkt BP2 gewechselt. Dort wird der Fehler ebenfalls mit der Fehlerart MIN-Fehler erkannt. Der Fehler bleibt somit erkannt und die Ersatzmaßnahme aktiv. Bei einem sich anschließenden Wechsel in den Betriebspunkt BP1 ändert sich das Signal und überschreitet jetzt die obere Schwelle. In diesem Betriebspunkt wird dann weiterhin auf Fehler erkannt aber jetzt mit der Fehlerart MAX-Fehler bei einem nachfolgenden Wechsel in den Betriebspunkt BP2 kann dieser Fehler nicht mehr erkannt werden, eine Fehlerheilung erfolgt jedoch nicht, weil der Fehler im Bereich B1 mit der Fehlerart MAX-Fehler erkannt wurde. Im Betriebspunkt BP2 wurde aber zuvor nur der MIN-Fehler erkannt, damit ist eine Fehlerheilung nicht möglich. Verschwindet im Laufe des weiteren Betriebs der Fehler wieder, kann im aktuellen Betriebspunkt BP2 die Fehlerheilung aufgrund der Fehlerart nicht erfolgen. Erst nach einem Wechsel in den Betriebspunkt 1, erfolgt die Fehlerheilung und die Aufhebung der Ersatzmaßnahme.

Die Erfindung wurde vorstehend anhand einer Klopferkennungseinrichtung erläutert, das erfindungsgemäße Verfahren kann jedoch auch für andere Fehlererkennungen ablaufen. In Verbindung mit einer Fehlererkennung und Fehlerheilung bei einer Brennkraftmaschine läuft das erfindungsgemäße Verfahren im Rechner des Steuergerätes der Brennkraftmaschine.

Das in Figur 3 angegebene Beispiel zur betriebspunktabhängigen Fehlerheilung von Komponenten entspricht im Prinzip dem Ausführungsbeispiel 3. Es ist dargestellt für die Auswertung der Lage einer Nockenwelle bei einer Brennkraftmaschine. Bei einer solchen Auswertung wird bei Erkennen eines fehlerhaften Zustandes einer Komponente der Fehler entsprechend des Betriebspunktes , beispielsweise der Sollwert der Komponente als MAX- MIN- oder NP-Fehler abgespeichert und die Komponente als fehlerhaft diagnostiziert. MAX-/MIN bedeutet Ober-/Unterschreitung eines tolerierbaren Wertes, NP- ist ein Nullpunktfehler.

Beim Verlassen des Betriebspunktes kann es allerdings wieder zu einer Fehlerheilung kommen, obwohl die Komponente weiterhin fehlerhaft ist. Beispielsweise gilt dies für eine Klemmende Nockenwelle in Spätanschlag.

Damit eine solche irrtümliche Fehlerheilung zuverlässig vermieden wird, wird bei Erkennen eines fehlerhaften Zustandes einer Komponente der Fehler entsprechend des vorliegenden Betriebspunktes als MAX-, MIN- oder NP-Fehler abgespeichert. Ausserdem wird der Betriebspunkt abgespeichert und die Komponente als fehlerhaft diagnostiziert. Gelöscht werden darf der Fehler erst dann, wenn zum einen der Betriebspunkt vorliegt, bei dem der Fehler erkannt wurde und zum anderen der fehlerhafte. Zustand, der zum Setzen des Fehlers führte, nicht mehr vorliegt. Für eine Fehlerheilung ist es dabei insbesonders erforderlich, dass der selbe Fehler (MAX-, MIN- oder NP-Fehler) nicht mehr vorliegt.

Realisiert wird eine solche betriebspunktabhängige Fehlerheilung von Komponente, indem im Block 30 ein Vergleich des Sollwertes mit dem Istwert erfolgt und das Vergleichsergebnis mit einer Schwelle SCHW verglichen wird. Ist die Differenz Sollwert-Istwert grösser als die Schwelle SCHW, wird auf Fehler erkannt und der Eingang S eines FLIP/FLOP 31 entsprechend angesteuert. Gleichzeitig wird bei erkanntem Fehler der zu diesem Zeitpunkt im Sample/Hold-Glied 32 vorhandene Sollwert SW durch Triggerung 33 weitergeleitet. Im Vergleicher 34 wird dieser Sollwert mit dem gemessenen Ist-Winkel verglichen. Vom Vergleichsergebnis wird in Block 35 der Betrag gebildet, der im Vergleicher 36 mit einer weiteren Schwelle SCHWH verglichen wird. Ergibt dieser Vergleich, dass der Betrag Sollwert-Istwinkel grösser ist als die Schwelle SCWH ,liegt der Fehler weiterhin vor und dem Eingang R des FLIP/FLOP 31 wird ein entsprechendes Signal zugeführt, das den erkannten Fehler aufrecht erhält. Ist der Betrag dagegen kleiner als die Schwelle SCHWH, erfolgt eine Fehlerheilung, d. h. am Ausgang des Flip/Flop 31 verschwindet das Fehlersignal.

## Patentansprüche

1. Verfahren zur Fehlererkennung und Fehlerheilung bei der Überwachung von Größen einer Brennkraftmaschine, die in einer Auswerteeinrichtung anhand eines Kennfeld oder einer Kennlinie auf Plausibilität überprüft werden, wobei bei Nichtplausibilität auf Fehler erkannt wird und bei vorgebbaren Bedingungen eine Fehlerheilung erfolgt, **dadurch gekennzeichnet, dass** eine Unterteilung in wenigstens zwei Bereiche des Kennfelds oder der Kennlinie erfolgt und eine Fehlererkennung in jedem Bereich des Kennfelds oder der Kennlinie durchgeführt wird und eine Fehlerheilung nur in dem Bereich des Kennfelds oder Kennlinie erlaubt ist, in dem der Fehler zuvor erkannt wurde.

2. Verfahren zur Fehlererkennung und Fehlerheilung nach Anspruch 1, **dadurch gekennzeichnet, dass** die Fehlererkennung erfolgt, sofern die Größen der Brennkraftmaschine vorgebbare Schwellwerte überschritten (MAX-Fehler) oder unterschritten (MIN-Fehler) werden oder eine Nullpunktlage unplausibel ist.

3. Verfahren zur Fehlererkennung und Fehlerheilung nach Anspruch 1 oder 2, **dadurch gekennzeichnet, dass** Fehler mit unterschiedlichen Fehlerarten erkannt werden und eine Fehlerheilung nur zugelassen wird, wenn in dem Bereich der Kennlinie oder des Kennfelds der Fehler mit der gleichen Fehlerart erkannt wurde und der Fehler nicht mehr vorliegt.

4. Verfahren zur Fehlererkennung und Fehlerheilung nach einem der vorhergehenden Ansprüche, **dadurch gekennzeichnet, dass** bei erkanntem Fehler für die Messgröße eine Ersatzgröße gebildet wird, die solange bestehen bleibt, bis eine Fehlerheilung erkannt wurde.

5. Verfahren zur Fehlererkennung und Fehlerheilung nach einem der vorhergehenden Ansprüche, **dadurch gekennzeichnet, dass** wenigstens ein weiterer zusätzlicher Bereich von Betriebsbedingungen der Brennkraftmaschine definiert wird, in dem weder eine Fehlererkennung noch eine Fehlerheilung durchgeführt wird.

6. Vorrichtung zur Fehlerkennung und Fehlerheilung mit wenigstens einer Recheneinrichtung, in der eines der Verfahren nach den Ansprüchen 1 bis 5 der Fehlererkennung und Fehlerheilung durchgeführt wird.

## Claims

1. Method for detecting and correcting faults when monitoring the variables of an internal combustion engine whose plausibility is checked in an evaluation device using a characteristic diagram or a characteristic curve, in which case faults are detected when implausibility occurs and faults are corrected under predefinable conditions, **characterized in that** a division into at least two areas of the characteristic diagram or of the characteristic curve is carried out and fault detection is carried out in each region of the characteristic diagram or of the characteristic curve and fault correction is permitted only in the region of the characteristic diagram or the characteristic curve in which the fault was previously detected.

2. Method for detecting and correcting faults according to Claim 1, **characterized in that** the detection of faults is carried out if the variables of the internal combustion engine exceed predefinable threshold values (MAX faults) or are undershot (MIN faults) or a zero point position is implausible.

3. Method for detecting and correcting faults according to Claim 1 or 2, **characterized in that** faults are detected with different types of fault and fault correction is permitted only if in the region of the characteristic curve or of the characteristic diagram the fault has been detected with the same type of fault and the fault is no longer present.

4. Method for detecting and correcting faults according to one of the preceding claims, **characterized in that** when a fault is detected an equivalent variable is formed for the measurement variable and said equivalent variable remains until fault correction has been detected.

5. Method for detecting and correcting faults according to one of the preceding claims, **characterized in that** at least one further additional range of operating conditions of the internal combustion engine in which neither fault detection nor fault correction is carried out is defined.

6. Device for detecting and correcting faults having at least one computing device in which one of the methods according to Claims 1 to 5 for detecting and correcting faults is carried out.

## Revendications

1. Procédé de reconnaissance et de correction d'erreur quand on surveille des grandeurs d'un moteur à combustion interne, selon lequel une installation d'exploitation vérifie à l'aide d'un champ caractéristique ou d'une courbe caractéristique la plausibilité de grandeurs, reconnait une erreur en cas de non plausibilité et corrige les erreurs dans des conditions prédéterminées,
**caractérisé en ce que**
on procède à une répartition en au moins deux zones du champ caractéristique ou de la courbe caractéristique, on reconnaît les erreurs dans chaque zone du champ caractéristique ou de la courbe caractéristique et on n'autorise une correction d'erreur que dans la zone du champ caractéristique ou de la courbe caractéristique dans laquelle l'erreur a été reconnue auparavant.

2. Procédé selon la revendication 1,
**caractérisé en ce que**
les erreurs sont reconnues quand les grandeurs du moteur à combustion interne dépassent des valeurs seuil prédéfinis (erreur MAX) ou ne les atteignent pas (erreur MIN), ou quand le point zéro a une position non plausible.

3. Procédé selon la revendication 1 ou 2,
**caractérisé en ce que**
on reconnaît des erreurs de différents types et on n'autorise une correction d'erreur que lorsque dans la zone de la courbe caractéristique ou du champ caractéristique l'erreur reconnue était de même type et que l'erreur n'existe plus.

4. Procédé selon l'une des revendications précédentes,
**caractérisé en ce que**
quand une erreur est reconnue, on forme pour la grandeur de mesure une grandeur de remplacement qui a cours jusqu'à ce qu'une correction d'erreur soit reconnue.

5. Procédé selon l'une des revendications précédentes,
**caractérisé en ce que**
on définit au moins une autre zone supplémentaire de conditions de fonctionnement pour le moteur à combustion interne, dans laquelle on n'effectue ni reconnaissance ni correction d'erreur.

6. Dispositif de reconnaissance et de correction d'erreur muni d'au moins une installation de calcul dans laquelle est exécuté un des procédés selon les revendications 1 à 5, pour reconnaître et pour corriger des erreurs.
